# EUROPÄISCHE PATENTSCHRIFT

(11) **EP 0 588 090 B1**
(45) Veröffentlichungstag und Bekanntmachung des Hinweises auf die Patenterteilung: **20.03.1996**
(21) Anmeldenummer: 93113241.9
(22) Anmeldetag: 19.08.1993
(51) Int. Cl.: B23Q 1/01

(54) **Maschinengestell für Werkzeugmaschinen**
Machine body for machine tools
Châssis de machine pour machines-outils

(30) Priorität: 14.09.1992 DE 4230502
(43) Veröffentlichungstag der Anmeldung: 23.03.1994
(73) Patentinhaber: BERNHARD STEINEL WERKZEUGMASCHINENFABRIK GmbH u. Co., D-78056 Villingen-Schwenningen (DE)
(72) Erfinder: Schütz, Willi, D-72175 Weiden (DE); Buggle, Günther, D-78056 Villingen-Schwenningen (DE)
(74) Vertreter: Patentanwälte Westphal, Buchner, Mussgnug Neunert, Göhring

(56) Entgegenhaltungen:
- DE-A- 2 461 948
- DE-C- 527 867
- US-A- 3 800 636
- WERKSTATT UND BETRIEB, Bd.123, Nr.4, April 1990, MüNCHEN Seiten 291 - 295 D. KEMMERLE 'Einsatzoptimierte Konstuktion eröffnet Mineralguss weitere Möglichkeiten'

## Beschreibung

Die Erfindung betrifft ein Maschinengestell für Werkzeugmaschinen gemäß dem Oberbegriff des Anspruchs 1.

Eine große Klasse von Werkzeugmaschinen weist ein Maschinengestell auf, welches aus einem waagerechten Bett und zumindest einem vertikalen an dem Bett angebrachten Ständer besteht. Je nach Art der Werkzeugmaschine sind Spann- und Antriebseinheiten für Werkstücke und Werkzeuge auf dem Bett und an dem Ständer angeordnet und in drei oder mehr Achsen gegeneinander verfahrbar gelagert.

Es ist bekannt, das Maschinengestell aus Grauguß oder Stahlguß herzustellen. Die Herstellung dieser Maschinengestelle ist aufwendig, da nach dem Guß eine Nachbearbeitung durch Fräsen oder Schleifen erforderlich ist. Insbesondere wegen dieser Nachbearbeitung können Maschinengestelle für größere Werkzeugmaschinen in der Regel nicht in einem Stück gegossen werden. Es ist daher noch ein zusätzlicher erheblicher Montagesaufwand für das Zusammenfügen der einzelnen Teile des Maschinengestells erforderlich.

Weiter ist es bekannt die Maschinengestelle als geschweißte Stahlkonstruktion auszuführen. Auch hier ist ein erheblicher Herstellungs- und Montageaufwand erforderlich.

Weiter ist es bekannt (z.B. EP 0 045 272 A2), Maschinengestelle aus einem Reaktionsharz-Beton einstückig zu gießen. Dieses Herstellungsverfahren ist kostengünstig. Die Maschinengestelle weisen gegenüber den genannten Maschinengestellen aus Grauguß, Stahlguß oder geschweißten Stahlkonstruktionen eine erheblich höhere Schwingungsdämpfung auf.

Allen diesen bekannten Maschinengestellen ist gemeinsam, daß der an dem Bett angebrachte Ständer turmartig frei von dem Bett nach oben ragt. Höhere Belastungen, Ungenauigkeiten in der justierten Aufstellung des Bettes, Temperaturschwankungen und Temperaturgradienten können daher zu Biege- und Torsionsbewegungen des Ständers gegenüber dem Bett führen. Solche Bewegungen beeinträchtigen unmittelbar die erzielbare Bearbeitungsgenauigkeit. Um zur Verbesserung der Genauigkeit Verformungsbewegungen des Ständers und des Bettes zu verringern, werden die Abmessungen und Querschnitte der Maschinengestelle vergrößert. Bereits eine geringe Verbesserung der Genauigkeit muß dabei jedoch mit einer erheblichen Erhöhung des Gewichtes und der Kosten des Maschinengestells erkauft werden.

Schließlich ist aus der US-A-3 800 636 bekannt, das horizontale Bett und den vertikalen Ständer einer werkzeugmaschine einstückig aus Beton zu gießen und durch eine vertikale zwischen dem Ständer und dem Bett aufgespannte Wand zu versteifen. Es wird dabei ein durch Armierungen vorgespannter Spannbeton verwendet. Die vertikale Wand ist dreieckig ausgebildet und führt schräg von dem Ständer nach unten zu dem Bett. Die vertikale Wand hat ausschließlich die Funktion den Ständer mit dem Bett versteifend zu verbinden. Der Spannbeton weist Nachteile in der Stabilität auf und neigt insbesondere zur Aufnahme von Feuchtigkeit.

Der Erfindung liegt die Aufgabe zugrunde, ein Maschinengestell für ein Bearbeitungszentrum zu schaffen, bei welchem Konstruktions- und Montageaufwand verringert sind.

Diese Aufgabe wird erfindungsgemäß gelöst durch ein Maschinengestell mit den Merkmalen des Anspruchs 1.

Vorteilhafte Ausführungen der Erfindung sind in den Unteransprüchen angegeben.

Bei dem erfindungsgemäßen Maschinengestell ist zusätzlich zu dem horizontalen Bett und dem vertikalen Ständer eine vertikale starre Wand vorgesehen, die einerseits mit dem Bett und andererseits mit dem Ständer starr verbunden ist. Diese Wand bewirkt eine formstabile Verstrebung von Ständer und Bett, welche das Maschinengestell gegen Biegung und Torsion aussteift. Die Aussteifung durch die Wand macht das Maschinengestell insgesamt zu einem in sich gegen Biegung und Verwindung formstabilen Gebilde. Ungenauigkeiten in der Justage beim Aufstellen des Machinengestells wirken sich praktisch nicht auf die Genauigkeit der gegenseitigen Positionierung von Bett und Ständer aus. Schwankungen der Raumtemperatur und insbesondere Temperaturgradienten im Bereich des Maschinengestells wirken sich weniger auf die Formhaltigkeit des Maschinengestells aus. Das Maschinengestell kann außerdem höhere Belastungen aufnehmen, was insbesondere bei der Bearbeitung schwerer Werkstücke und bei hohen Bearbeitungsdrücken, Spannleistungen usw. von Wichtigkeit ist. Aufgrund der Aussteifung durch die Wand können weiterhin die Materialquerschnitte des Maschinengestells verringert werden, was wiederum Gewicht und Kosten einspart. Durch das geringere Gewicht und eine großflächige Ausbildung des Bettes können auch größere Bearbeitungszentren mit einer niedrigen Flächenbelastung des Bodens aufgestellt werden.

Um auch die Montagekosten zu verringern, wird das Maschinengestell bestehend aus dem Bett, dem Ständer und der Wand einstückig gegossen. Als Material hierzu dient ein Reaktionsharz-Beton (Polymer-Beton). Der Guß des Maschinengestells kann mit einer ausreichend hohen Genauigkeit durchgeführt werden, so daß keine aufwendige Nachbearbeitung erforderlich ist. Insbesondere können in das Machinengestell bereits Leitungen und Kanäle für das Versorgungssystem des Bearbeitungszentrums eingegossen werden. Diese Versorgungssysteme, beispielsweise Stromversorgung, Steuerung, Hydraulik, Kühlmittelzu- und -abfuhr, Späneentsorgung usw. können leicht installiert werden.

Die zusätzliche Aussteifung durch die Wand erlaubt bei verbesserter Stabilität geringer Materialquerschnitte von Bett und Ständer. Dies bedeutet nicht nur geringeres Gewicht und geringere Materialkosten. Es können außerdem auch in dem Maschinengestell größere Hohlräume ausgespart werden, die zusätzlich in vorteilhafter Weise genutzt werden können. Es können diese Hohlräume beispielsweise als Kühlmittelbehälter mit großem Fassungsvolumen verwendet werden. Das größere Kühlmittelvolumen ermöglicht eine effektivere Kühlung, was wiederum zu einer höheren Bearbeitungsgenauigkeit führt.

Neben diesen Vorteilen, die sich aus der Verstrebung und Aussteifung des Maschinengestells ergeben, wird die Wand zusätzlich auch als tragender Bestandteil des Maschinengestells genutzt. Die Wand kann Führungen und Trageeinrichtungen für unterschiedlichste Funktionselemente und Maschinenteile der Werkzeugmaschine aufnehmen. Dies bringt wesentliche Einsparung in Konstruktions- und Montageaufwand mit sich.

Vor allem können an der Wand auch solche Funktionselemente angeordnet werden, die bei herkömmlichen Bearbeitungszentren seitlich an dem Bett angeordnet und angebaut werden müssen. Das Bearbeitungszentrum kann somit in die Höhe bauen und beansprucht eine geringere Stellfläche.

Der Spindelkasten des Bearbeitungszentrums ist neben der Wand horizontal verschiebbar auf dem Bett geführt. Oberhalb des für die Bewegung des Spindelkastens benötigten Raumes kann an der Wand beispielsweise auf einer Konsole ein Werkzeugspeicher angeordnet sein. Über dem Werkzeugspeicher können Führungen an der Wand angebracht sein, in welchen eine Handling-Einheit verfahrbar ist, um die Werkzeuge zwischen Speicher und Arbeitsraum des Bearbeitungszentrums zu wechseln. Die zusätzlich am Maschinengestell vorgesehene Wand ermöglicht also die Anordnung von Spindelkasten, Werkzeugmagazin und Handling-Einrichtung in drei Etagen übereinander, wodurch sich ein außerordentlich kompakter, platzsparender Aufbau ergibt.

Schließlich kann die freibleibende Rückfläche der Wand auch als Montagewand oder Gehäusewand für die notwendigen Versorgungs- und/oder Steuerungseinrichtungen des Bearbeitungszentrums genutzt werden. Hierdurch ergibt sich eine weitere Einsparung an Platzbedarf und Konstruktionsaufwand.

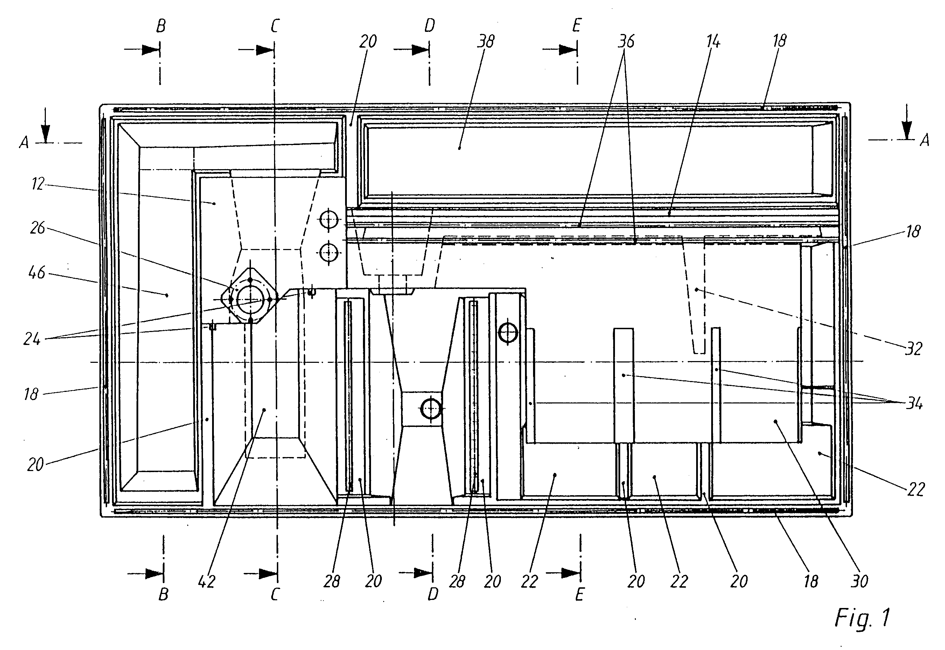

Im folgenden wird die Erfindung anhand eines in der Zeichnung dargestellten Ausführungsbeispiels näher erläutert. Es zeigen
- Figur 1 -: eine Draufsicht auf ein erfindungsgemäßes Maschinengestell für ein Bearbeitungszentrum,

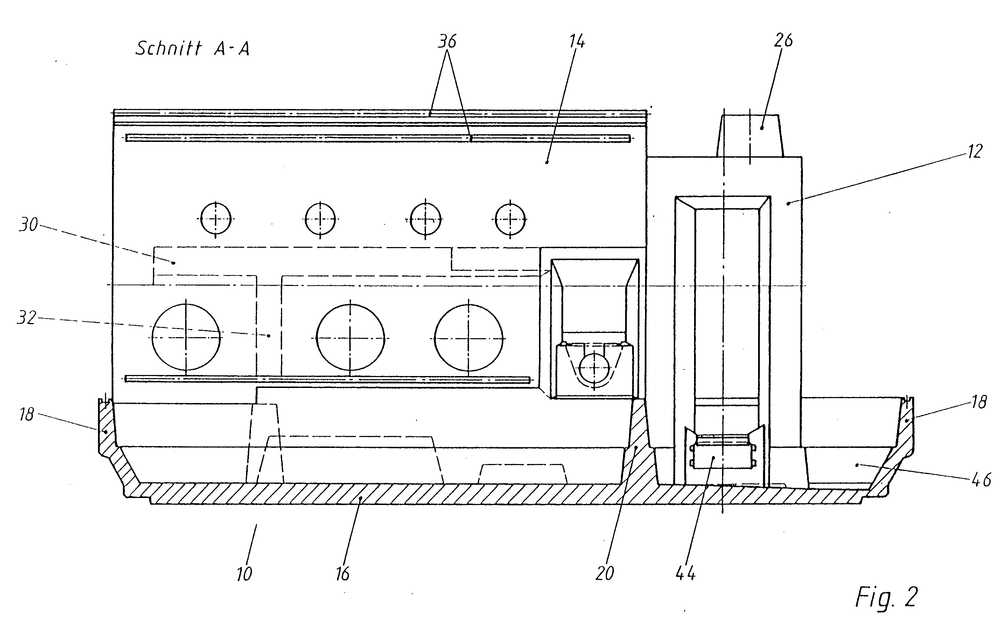

- Figur 2 -: einen Vertikalschnitt gemäß der Linie A-A in Figur 1,

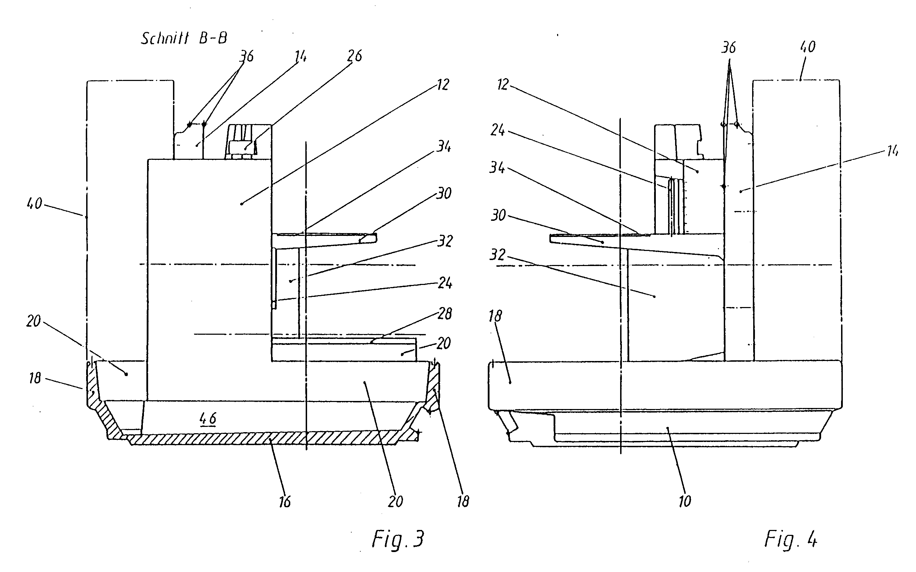

- Figur 3 -: einen Vertikalschnitt gemäß der Linie B-B in Figur 1,
- Figur 4 -: eine Seitenansicht des Maschinengestells in Figur 1 von rechts,

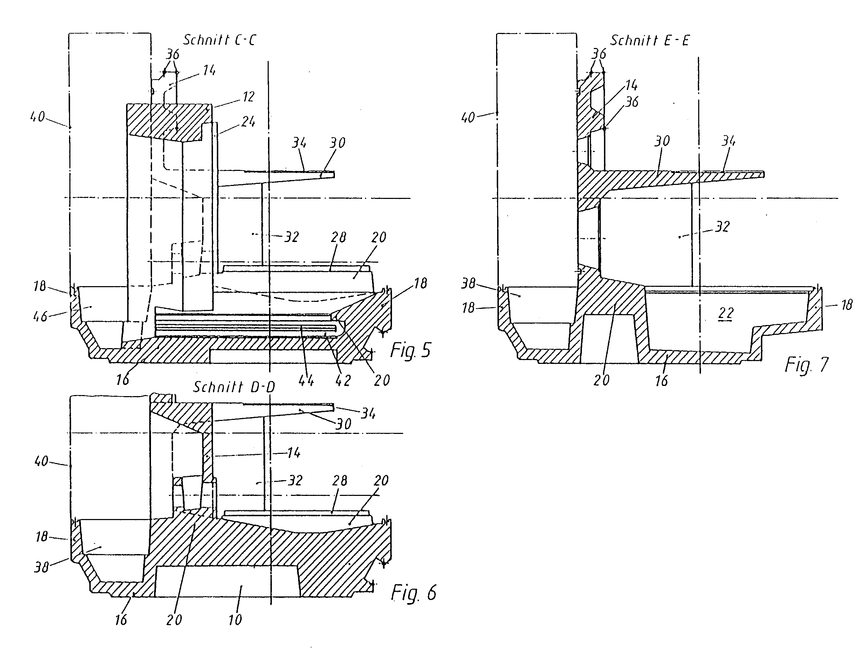

- Figur 5 -: einen Vertikalschnitt gemäß der Linie C-C in Figur 1,
- Figur 6 -: einen Vertikalschnitt gemäß der Linie D-D in Figur 1 und
- Figur 7 -: einen Vertikalschnitt gemäß der Linie E-E in Figur 1.

Das in der Zeichnung dargestellte Maschinengestell ist für ein Bearbeitungszentrum bestimmt, bei welchem der Spindelkasten mit horizontaler Arbeitsspindel in der horizontalen Ebene verschiebbar ist, während das Werkstück an einem vertikal verschiebbaren Werkstücktisch mit vertikaler Aufspannebene gespannt wird. Arbeitsspindel und Werkstückachse sind dabei in einer horizontalen Ebene rechtwinklig zueinander angeordnet, so daß Kühlmittel und Späne frei nach unten fallen können.

Das Maschinengestell besteht im wesentlichen aus einem Bett 10, einem vertikal stehend auf dem Bett 10 angeordneten Ständer 12 und einer vertikalen Wand 14. Das gesamte Maschinengestell ist einstückig aus einem Reaktionsharz-Beton gegossen.

Das Bett 10 hat die Form eines flachen rechteckigen Quaders und wird gebildet durch eine rechteckige Bodenplatte 16 (Seitenverhältnis ca. 2:1) mit einem umlaufenden nach oben gezogenen Rand 18, so daß sich eine wannenförmige Konfiguration des Bettes 10 ergibt. Der Innenraum des Bettes 10 weist aufrecht stehende Stege 20 auf, die in unterschiedlicher Anordnung teils in Längsrichtung, teils in Querrichtung des Bettes 10 verlaufen und an dem Rand 18 ansetzen. Die Stege 20 unterteilen das wannenförmige Bett 10 in unterschiedliche wannenförmige Aufnahmeräume 22. Die Stege 20 dienen weiter zur Versteifung des Bettes 10. Das Bett 10 weist dadurch aufgrund des umlaufenden Randes 18 und der Stege 20 bei geringem Materialquerschnitt und Materialverbrauch eine hohe Biege- und Verwindungssteifigkeit auf.

Nahe einer Schmalseite des Bettes 10 ist der vertikale Ständer 12 angeordnet. In den Ständer 12 sind vertikale Führungsschienen 24 eingesetzt, die zur Führung eines nicht dargestellten Schlittens dienen, welcher den Werkstück-Aufspanntisch trägt. Weiter ist eine Aufnahme 26 für die nicht dargestellte Antriebsspindel dieses Schlittens in den Ständer 12 integriert.

Auf einem in Längsrichtung des Bettes 10 verlaufenden Steg 20 ist die vertikale Wand 14 angegossen. Die Wand 14 hat rechteckige Form, wobei ihre Höhe im wesentlichen der Höhe des Ständers 12 entspricht. Mit einer vertikalen Kante ist die Wand 14 an den Ständer 12 angegossen. Die Wand 14 erstreckt sich von dem Ständer 12 in Längsrichtung des Bettes 10 bis zu der dem Ständer 12 entgegengesetzten Schmalseite des Bettes 10. In Querrichtung des Bettes 10 unterteilt die Wand 14 die Fläche des Bettes etwa im Verhältnis 1:3.

In dem größeren Flächenbereich des Bettes 10 zwischen der Wand 14 und dem in Längsrichtung verlaufenden Rand 18 sind anschließend an den Ständer 12 zwei parallele senkrecht zur Wand 14 verlaufende Stege 20 vorgesehen, die auf ihrer Oberkante Querführungen 28 tragen. Auf die Querführungen 28 wird quer verschiebbar ein nicht dargestellter Schlitten aufgesetzt, der parallel zur Wand 14 verlaufende Längsführungen für den ebenfalls nicht dargestellten Spindelkasten trägt. Der Spindelkasten mit der horizontal und parallel zur Wand 14 angeordneten Spindel ist somit in dem Bereich neben der Wand 14 parallel zur Wand (Z-Richtung) und auf den Querführungen 28 rechtwinklig zur Wand (Y-Richtung) verfahrbar.

Auf etwa halber Höhe der Wand 14 kragt als Trageeinrichtung eine waagerechte Konsole 30 aus der Ebene der Wand 14 vor. Die Konsole 30 erstreckt sich im dargestellten Ausführungsbeispiel in dem von dem Ständer 12 abgewandten Bereich der Wand 14 über etwa 2/3 der Länge der Wand 14. Die Höhe der Konsole 30 über der Oberkante des Bettes 10 ist so gewählt, daß der Spindelkasten in seiner Endstellung in Z-Richtung mit seinem rückwärtigen Teil unter die Konsole 30 fahren kann. Der höher bauende vordere Teil des Spindelkasten bewegt sich dabei vor der Konsole 30. Die Konsole 30 ist einstückig an die Wand 14 angegossen. Um die vorkragende Konsole 30 zusätzlich abzustützen, ist eine Stütze 32 hinter dem Bewegungsbereich des Spindelkastens zwischen einem Steg 20 des Bettes 10 und der Konsole 30 vorgesehen. Die Stütze 32 ist ebenfalls einstückig an das Bett 10, die Wand 14 und die Konsole 30 angegossen.

Auf die Konsole 30 sind senkrecht zur Wand 14 verlaufende Aufnahmeschienen 34 aufgesetzt. Die Aufnahmeschienen 34 dienen zur Aufnahme von nicht dargestellten Werkzeug-Kassetten.

An der waagerechten Oberkante der Wand 14 sind Führungen 36 vorgesehen, die sich über die gesamte Länge der Wand 14 erstrecken. Auf den Führungen 36 wird eine nicht dargestellte Handling-Einheit verfahrbar geführt, mit welcher Werkzeuge zwischen den auf der Konsole 30 sitzenden Werkzeug-Kassetten und der Arbeitsspindel des Spindelkastens gewechselt werden können.

Auf der von dem Spindelkasten und der Konsole 30 abgewandten Seite der Wand 14 ist zwischen der Wand 14 und dem Rand 18 des Bettes 10 ein Freiraum 38 vorhanden. Dieser Freiraum 38 dient zur Aufnahme von Versorgungseinheiten und energieführenden Leitungen des Bearbeitungszentrums. In den Freiraum 38 werden die in der Zeichnung strich-punktiert angedeuteten Schaltschränke 40 für die Stromversorgung, die Steuerung usw. eingesetzt. Die Wand 14 kann dabei gleichzeitig als Rückwand dieser Schaltschränke dienen und für die Montage der Versorgungseinheiten genutzt werden.

Die Wand 14 weist Durchbrüche für den Anschluß der Versorgungseinheiten auf. Weiter sind in die Stege 20 des Bettes 10 und in den Ständer 20 Kanäle und Rohrleitungen eingegossen, durch welche die Versorgungs- und Steuerungsleitungen geführt werden. Weiter wird der Kühlmittelumlauf durch solche Kanäle geführt.

Unterhalb des Arbeitsraumes des Bearbeitungszentrums, der durch die Querführungen 28 und die mit den vertikalen Führungsschienen 24 versehenen Stirnseite des Ständers 12 in dem Bett 10 definiert ist, ist eine Auffangrinne 42 in dem Bett 10 begrenzt, in welche ein Späneförderer 44 eingesetzt wird. An der freien Schmalseite des Bettes 10 ist seitlich neben dem Arbeitsraum in dem Bett 10 eine Auffangwanne 46 für das verschmutzte Kühlmittel vorgesehen. Aus dieser Auffangwanne 46 wird das Kühlmittel über Filter in einen der Aufnahmeräume 22 gepumpt, der als Vorratsbehälter dient. Aus dem Vorratsbehälter wird das Kühlmittel wieder zur Kühlung in den Arbeitsraum geführt.

Da das gesamte Maschinengestell bestehend aus Bett 10, Ständer 12, Wand 14 mit allen beschriebenen Einzelheiten in einem Stück gegossen wird und hierbei auch die Installationskanäle und -leitungen bereits eingegossen sind, ergeben sich erhebliche Einsparungen an Montagearbeit und -zeit.

## Patentansprüche

1. Maschinengestell für ein Bearbeitungszentrum, mit einem waagerechten Bett (10), mit einem vertikalen, an dem Bett (10) angebrachten Ständer (12), mit einem auf dem Bett (10) verfahrbaren Spindelkasten, mit einer an dem Ständer (12) angebrachten Werkstückaufspannung und mit einer zwischen dem Bett (10) und dem Ständer (12) aufgespannten, diese zur Verstrebung starr miteinander verbindenden vertikalen Wand (14), wobei das Bett (10), der Ständer (12) und die Wand (14) einstückig aus Beton gegossen sind, dadurch gekennzeichnet, daß die Wand (14) im wesentlichen rechteckig ausgebildet ist und sich in Längsrichtung von dem Ständer (12) im wesentlichen bis zu der von dem Ständer (12) entfernten Schmalseite des Bettes (10) erstreckt, daß die Wand (14) Führungen (36), auf welchen Funktionselemente des Bearbeitungszentrums verfahrbar geführt sind, und/oder Trageeinrichtungen (30) zur Aufnahme von Funktionselementen und/oder Maschinenelementen des Bearbeitungszentrums aufweist, daß diese Führungen (36) und/oder Trageeinrichtungen (30) oberhalb des für die Bewegung des parallel zur Wand (14) auf dem Bett (10) verfahrbaren Spindelkastens benötigten Raumes angeordnet sind und daß der Beton ein Reaktionsharz-Beton ist.

2. Maschinengestell nach Anspruch 1, dadurch gekennzeichnet, daß die Wand (14) im wesentlichen die Höhe des Ständers (12) aufweist.

3. Maschinengestell nach Anspruch 1 oder 2, dadurch gekennzeichnet, daß die Trageeeinrichtungen zumindest eine einstückig an der Wand (14) angeformte, aus der Ebene der Wand (14) vorkragende Konsole (30) aufweisen

4. Maschinengestell nach einem der Ansprüche 1 bis 3, dadurch gekennzeichnet, daß die Trageeinrichtungen (30) zur Aufnahme von Werkzeugen dienen.

5. Maschinengestell nach Anspruch 4, dadurch gekennzeichnet, daß oberhalb der in Längsrichtung der Wand (14) langgestreckten Trageeinrichtungen (30) eine Führung (36) für eine Handling-Einheit zum Wechseln der Werkzeuge zwischen den Trageeinrichtungen (30) und der Arbeitsspindel des Spindelkastens angeordnet ist.

6. Maschinengestell nach einem der vorhergehenden Ansprüche, dadurch gekennzeichnet, daß die Wand (14) als Montagewand und/oder als eine Gehäusewand für Versorgungs- und/oder Steuereinrichtungen des Bearbeitungszentrums dient.

## Claims

1. A machine body for a machining centre, having a horizontal bed (10), having a vertical pillar (12) mounted on the bed (10), having a headstock movable on the bed (10), having a workpiece holding device mounted on the pillar (12) and having a vertical wall (14) clamped between the bed (10) and the pillar (12), connecting them fixedly with one another for bracing purposes, wherein the bed (10), the pillar (12) and the wall (14) are cast in one piece from concrete,
**characterised in that** the wall (14) has a substantially rectangular construction and extends in the longitudinal direction from the pillar (12) substantially to the narrow side of the bed (10) remote from the pillar (12),
**in that** the wall (14) comprises guides (36), on which functional components of the machining centre are movably guided, and/or load-bearing devices (30) for receiving functional components and/or machine components of the machining centre,
**in that** these guides (36) and/or load-bearing devices (30) are disposed above the space required for movement of the headstock movable on the bed (10) parallel to the wall (14),
**and in that** the concrete is a reaction resin concrete.

2. A machine body according to Claim 1,
**characterised in that** the wall (14) is substantially the height of the pillar (12).

3. A machine body according to Claim 1 or 2,
**characterised in that** the load-bearing devices comprise at least one bracket (30) formed integrally with the wall (14), and protruding from the plane of the wall (14).

4. A machine body according to one of Claims 1 to 3,
**characterised in that** the load-bearing devices (30) serve to receive tools.

5. A machine body according to Claim 4,
**characterised in that** a guide (36) for a handling unit for changing the tools between the load-bearing devices (30) and the work spindle of the headstock is disposed above the load-bearing devices (30) extending lengthwise in the longitudinal direction of the wall (14).

6. A machine body according to one of the preceding Claims,
**characterised in that** the wall (14) serves as an assembly wall and/or as a housing wall for supply and/or control devices of the machining centre.

## Revendications

1. Châssis de machine pour un centre d'usinage, comportant un socle horizontal (10), un montant vertical (12) fixé au socle (10), une poupée fixe coulissant sur le socle (10), une fixation pour la pièce à usiner fixée sur le montant (12) et une paroi verticale (14) montée entre le socle (10) et le montant (12), cette paroi étant fixée au socle et au support de manière à résister à la torsion, le socle (10), le montant (12) et la paroi (14) étant coulés d'une seule pièce en béton, caractérisé en ce que la paroi (14) est essentiellement rectangulaire et s'étend dans la direction longitudinale du montant jusqu'au petit côté opposé du socle (10), la paroi (14) comporte des guides (36) sur lesquels sont guidés coulissants les éléments de fonctionnement du centre d'usinage et/ou présentent des installations de support (30) pour recevoir des éléments de fonctionnement et/ou des éléments de machine du centre d'usinage, ces guides (36) et/ou ces installations de support (30) étant disposés au-dessus de l'espace nécessaire au déplacement de la poupée fixe se déplaçant sur le socle (10) parallèlement à la paroi (14) et le béton est un béton avec de la résine.

2. Châssis de machine selon la revendication 1, caractérisé en ce que la paroi (14) a sensiblement la hauteur du montant (12).

3. Châssis de machine selon la revendication 1 ou 2, caractérisé en ce que les installations de support présentent au moins une console (30) venant en saillie de la paroi (14) formée d'une seule pièce avec la paroi.

4. Châssis de machine selon les revendications 1 à 3, caractérisé en ce que les installations de support (30) servent à recevoir des outils.

5. Châssis de machine selon la revendication 4, caractérisé en ce qu'un guide (36) pour une unité de changement d'outil pour échanger les outils entre l'installation de support (30) et la poupée d'usinage de la poupée fixe se trouve au-dessus des installations de support (30) s'étendant dans la direction longitudinale de la paroi (14).

6. Châssis de machine selon une des revendications précédentes, caractérisé en ce que la paroi (14) sert comme paroi de montage et/ou comme paroi de boîtier pour le dispositif d'alimentation et/ou de commande du centre d'usinage.
